# EUROPEAN PATENT APPLICATION

(11) **EP 4 117 177 A1**
(43) Date of publication of application: **11.01.2023**
(21) Application number: 21382614.2
(22) Date of filing: 07.07.2021
(51) Int. Cl.: H02S 20/32, F24S 50/60

(54) **SOLAR TRACKER WITH BRAKE CONTROL**

(71) Applicant: Soltec Innovations, S.L., 30500 Molina de Segura (ES)
(72) Inventor: Carpio Obré, Francisco Javier, 30500 Molina de Segura (ES)
(74) Representative: Isern Patentes y Marcas S.L.

(57) **Abstract**

The present invention relates to a solar tracker with brake control, which improves performance against high torque stresses. It includes: solar modules (1); torque tube (2), to provide solar tracking to the solar modules (1); motor (4); reversible demultiplying system (3) to transmit rotation from the motor (4) to the torque tube (2); brake (5) to brake the motor (4); controller (8); and torque sensors (9, 10, 11), to determine torque supported by the torque tube (2). The controller (8) disconnects the brake (5) in excess torque conditions, releasing the rotation of the torque tube (2), and reconnects the brake (5) when the excess torque conditions cease. One or more stoppers (12), to limit the rotation of the solar modules (1), are attached to the torque tube (2). The invention is especially applicable to multidrive trackers with harmonic reduction gearbox.

## Description

### Technical field of the invention

The present invention can be included within the field of solar energy. In particular, the object of the present invention relates to a solar tracker including a brake control.

### Background of the invention

Solar trackers are known, including conventionally known elements, such as: a frame; solar modules mounted on the frame; a torque tube, connected with the solar modules; a motor; a demultiplying system, such as a gearbox, which transmits rotation from the motor to the torque tube, to provide solar tracking to the solar modules; attachments that support the frame on the ground; a controller: and a brake to brake the motor, preventing the wind from moving the solar modules out of the preset tracking point thereof.

However, when the wind is particularly strong, the solar modules are subjected to excessive stresses that can cause damage to the solar modules and the rest of the elements of the solar tracker.

### Summarised description of the invention

The present invention solves the foregoing problem by means of a solar tracker equipped with elements that act on the brake of the motor in such a way that, in the event of loads, such as strong wind, which generate excessive torque, it enables the panels and in general, the table thereof to rotate along with the torque (that is, without opposing the torque, so as not to be damaged), but with very limited acceleration. In the field of the invention, "table" is understood as the set of elements of a tracker including: torque tube, photovoltaic panels, grid to support the modules, and elements for attaching the modules to the grid. Ultimately, the table is made up of the elements after the reduction gear, so that it does not include either drive or drive support. For the purposes of the present invention, the terms "table" and "panels" would be interchangeable.

To enable the panels to rotate, the solar tracker incorporates, among the aforementioned elements, a reversible type demultiplying system, such as a reversible gearbox, as well as torque sensors (for example, strain gauges); and a controller configured to disconnect the brake in excess torque conditions, releasing the rotation of the torque tube, and also, when applicable, when the brake is disconnected, to reconnect the brake, that is, make the brake available when low torque conditions occur. The demultiplying system provides a demultiplication, in particular, a demultiplication value, between the rotation of the motor and the rotation of the torque tube. They can be systems of a certain complexity, within which reduction gearboxes are envisaged; for example, reduction gearboxes plus auxiliary systems, wherein the total gear ratio value is obtained by combining (for example, multiplying) the gear ratio value of the reduction gearbox and the gear ratio values of the auxiliary systems. Among the valid reversible demultiplying systems, in particular gearsboxes, for example, epicyclic gearboxes or harmonic gearboxes, among others, can be considered.

The tracker of the invention can further incorporate at least one stopper that prevents the rotation of the panels from exceeding a predetermined value, so that the solar modules do not occupy a position that could endanger the integrity thereof or that of other elements of the solar tracker, for example, in the event of a breakdown of the gearbox system. The stopper or stoppers may preferably be attached to the torque tube.

By means of the present invention, the table of the solar modules is enabled to rotate in the face of, for example, high wind loads, while preventing at the same time that, as a consequence of the brake being deactivated, the modules acquire an excessive acceleration, and therefore speed, due to a high gear ratio value of the gearbox system. In general, the reversible gearbox systems on the market have overall gear ratio values greater than 30000:1. By way of illustration, gear ratio values of 25000:1 would be sufficient for the purpose of the invention, since they enable working with motors of reduced power and cost.

In an exemplary embodiment, the invention in turn reversibly enables the table of the solar modules to be naturally arranged at the angle of least load, enabling locking again when the torque to which the axis is subjected drops below a certain threshold.

The implementation of the invention involves a reduced investment, such as updated software, slight modifications to the controller; torque sensors, such as strain gauges and, where appropriate, a stopper that sets the rotation limit of the table. The torque sensors can be communicated with the controller both by means of wiring, as well as, alternatively, by means of wireless communication, for example, by means of transducers.

The invention is of advantageous application in solar trackers with reversible demultiplying system (i.e., reduction gearbox) and integrated brake. In particular, it is of advantageous application for a multidrive tracker, which comprises two or more reduction gearboxes solidly attached to one same torque tube. A particularly advantageous case is that of so-called harmonic reduction gearboxes.

### Brief description of the figures

The foregoing and other advantages and features will be better understood based on the following detailed description of several embodiments in reference to the attached drawings, which must be interpreted in an illustrative and nonlimiting manner and in which:
- Figure 1 shows a perspective view of the solar tracker of the invention.
- Figure 2 shows a detail of the reduction gearbox of the tracker of Figure 1.
- Figure 3 represents a flow chart illustrating a preferred embodiment of the torque control by means of brake, according to the present invention.

### Detailed description of a preferred embodiment of the invention

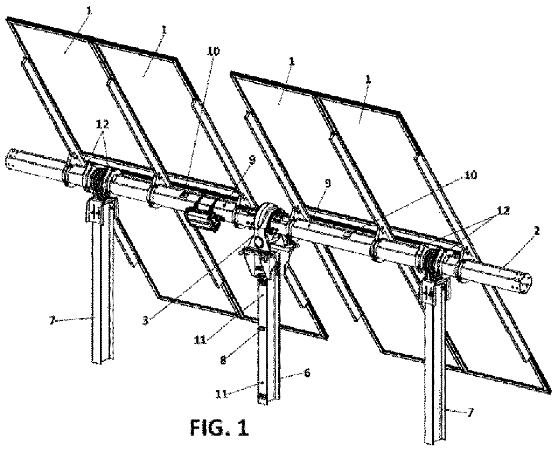

Below, a detailed description of a solar tracker with brake control object of the present invention is provided with the help of Figures 1-3 referred to above.

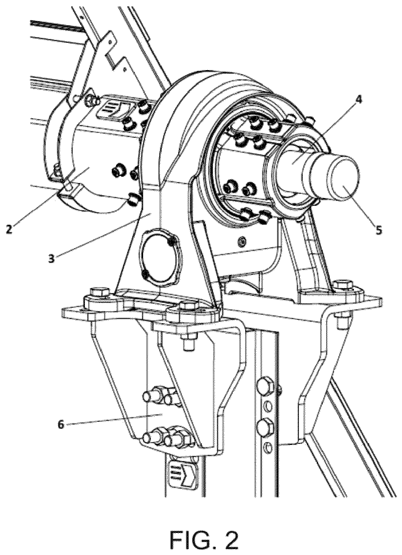

The solar tracker of the invention, as can be seen in Figure 1, comprises a frame that is intended to support one or more solar modules (1), which are part of the corresponding tables thereof. The purpose of the tracker is to provide solar tracking to the solar modules (1), by means of a rotation around a rotation axis. For this purpose, the tracker includes a torque tube (2) that is coaxial with the rotation axis. One or more reversible demultiplying systems (3), such that reversible reduction gearboxes (3) transmit rotation, from a motor (4) to the torque tube (2). The motor (4) comprises a brake (5), as illustrated in Figure 2, which can be of various types, such as magnetic, drum, disc, etc., and is equipped with the corresponding drive mechanism thereof (not shown). The brake (5) exemplified in Figure 2 is a magnetic brake.

The tracker further incorporates a set of ground attachments (6, 7), to support the frame on the ground, in particular, to support the torque tube (2). The ground attachments (6, 7) may include, by way of example, thrust poles, as shown in the figures. Some of the ground attachments (6, 7) make up a respective gearbox attachment (6), to support the corresponding demultiplying system (3) thereof. Other ground attachments (6, 7) are additional ground attachments (7), which do not support the demultiplying system (3). A controller (8) is responsible for controlling the operation of the tracker.

The tracker described additionally includes, as an example of torque sensors (9, 10, 11), one or more strain gauges (9, 10, 11), attached to the torque tube (2), and/or to the gearbox attachment (or attachments) (6), and that are communicated with the controller (8), to capture the torque moment to which the torque tube (2) is subjected. The strain gauges (9, 10, 11) preferably comprise one or more pairs, generally a single pair. Figure 1 shows several examples of arrangement of the pair of strain gauges (9, 10, 11), superimposed for the sake of conciseness. According to a first example, first strain gauges (9, 10), as indicated above, are attached to the torque tube (2), preferably at points aligned along the direction of the rotation axis. It is preferred that the first strain gauges (9, 10) are located on both sides of the demultiplying system (3), such as on both sides of the reduction gearbox (3). Figure 1 illustrates a case of first strain gauges closest (9) to the demultiplying system (3) and a case of first strain gauges further away (10) from the demultiplying system (3). In a second example, second strain gauges (11) are mounted on the gearbox attachment (6), preferably at points aligned along the longitudinal axis of the gearbox attachment (6), in this case, the vertical direction.

Additionally, there is one or more stoppers (12) that limit the maximum rotation of the table, preventing the solar modules (1) from rotating to a point wherein they can be damaged or damage other elements of the solar tracker. According to a preferred example shown in the figures, the stopper (12) or the stoppers (12) are attached to the torque tube (2). Figure 1 shows a stopper (12) located on each side of one of the additional ground attachments (7).

The controller (8) is configured to unlock the brake (5) of the motor (4) based on the torque values obtained from the signals of the strain gauges (9, 10, 11). The strain gauges (9, 10, 11) supply the controller (8) with instantaneous torque signals, or electrical signals that can be transformed into instantaneous torque signals.

Under normal operating conditions, that is, when the torque is not excessive, for example, because there is no excessive wind, the brake (5) is available to brake the motor (4) and prevent the solar modules (1) from coming out of the tracking point.

Under excess torque conditions, the controller (8) issues a command to disconnect the brake (5), releasing the rotation of the torque tube (2) and, therefore, of the solar modules (1). In this case, the cause of the excess torque, for example, the wind, tends to rotate the aforementioned table, transmitting the torque to the demultiplying system (3) which, in turn, transmits the torque to the motor (4), forcing the motor (4) to rotate reversibly along with the torque. The high gear ratio value (of the order of 35000:1) of the demultiplying system (3) prevents a sudden rotation of the table. In short, the rotation of the table is enabled, in particular, of the panels (1), induced by a wind load, but with an angular acceleration limited by the high gear ratio. Excess torque conditions can be, for example, that the torque reaches or exceeds a predetermined upper threshold value, either in particular single moment(s), or during a predetermined period of time, or a predetermined number of times within a predetermined period of time, etc.

Furthermore, when, with the brake (5) disconnected, low torque conditions occur, the controller (8) issues a command to reconnect the brake (5), that is, to make the brake (5) available. The stopper (12) or stoppers (12) described above limit the rotation of the table to prevent damages. Analogously to the event of excess torque, various conditions for low torque can be defined, such as the torque falling to values equal to or less than a predetermined lower threshold value, either in particular single moment(s), or during a predetermined period of time, or a predetermined number of times within a predetermined period of time, etc.

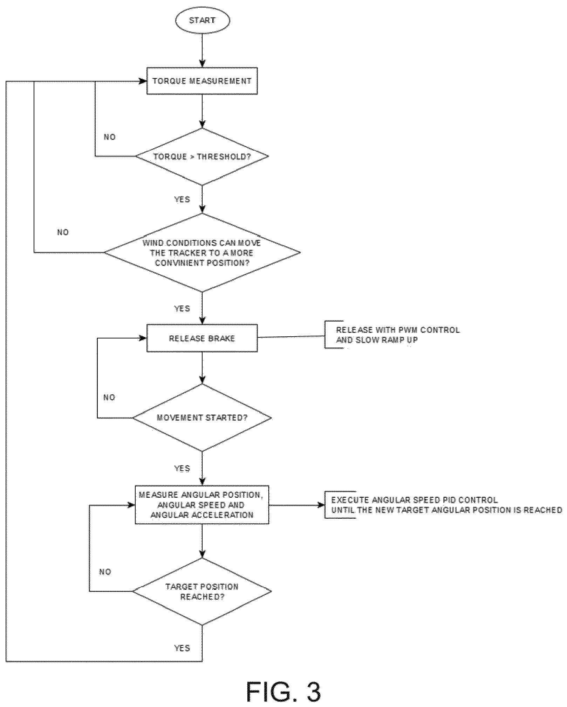

Next, a concrete example of torque control is described in light of Figure 3, by way of illustration. When the torque measured by the torque sensors (9, 10, 11) exceeds a certain threshold, the brake (5) of the motor (4) is deactivated, so that the measured torque gradually decreases, such as by means of a smooth acceleration ramp with PWM (pulse width modulation) control. The PWM control has a PWM duty cycle that can be fixed or variable, depending on environmental conditions or the structural features of the tracker. As a consequence, once the movement is enabled, the table will move in a controlled way to a new position due to the force of the wind.

This control enables, for example, a predetermined angular speed to be established by means of a closed-loop PID control of the action on the brakes and angular measurement with inclinometers arranged in the controller (8).

Normally, the speed and direction of the wind are known at a general plant (or determined subfield) level, which enables ideal parameters for the position of the solar trackers to be established so that they are stable and offer the minimum torque within that situation of structural stability.

These parameters can serve as a starting point before the controller (8) decides to measure torque and act on the brake (5). If the wind thrust is capable of bringing the tracker to a position that is considered more favourable, the process of controlled brake (8) release is started with three main instructions: in angular speed, in angular position and/or in torque.

Once the target angular position has been reached, determined by the environmental conditions measured by instruments such as anemometers and/or vanes, the brake (5) is locked again and it is confirmed that the measured torque has reduced, repeating the process again in the event that the wind conditions have changed and if all the conditions are met again.

## Claims

1. A solar tracker with brake control, wherein the solar tracker comprises:
- a torque tube (2), to provide solar modules (1) with rotation around a rotation axis coaxial with the torque tube (2);
- a motor (4);
- at least one reversible demultiplying system (3) to transmit rotation from the motor (4) to the torque tube (2);
- a brake (5) to brake the motor (5); and
- a controller (8);
the solar tracker being **characterised in that** it additionally comprises torque sensors (9, 10, 11), to transmit to the controller (8) signals of, or signals that enable torque supported by the torque tube (2) to be determined;
wherein the controller (8) is configured to disconnect the brake (5) when preset excess torque conditions occur, releasing the rotation of the torque tube (2).

2. The solar tracker according to any of claim 1, wherein the controller (8) is configured to disconnect the brake (5), and bring the tracker to a position considered more favourable, by means of a control based on any of the following instructions: angular speed instruction, for example, pulse width modulated speed instruction; angular position instruction; and torque instruction.

3. The solar tracker according to any of claims 1-2, wherein the controller (8) is configured to identify as excess torque conditions that the torque reaches or exceeds a predetermined upper threshold value.

4. The solar tracker according to claim 3, wherein the controller (8) is configured to identify as excess torque conditions that the torque reaches or exceeds a predetermined upper threshold value in any of the following circumstances:
- in particular single moment(s);
- for a time interval equal to or greater than a preset time; and
- a predetermined number of times within a predetermined time interval.

5. The solar tracker according to any of claims 1-4, wherein the controller (8) is additionally configured to, when the brake (5) is disconnected, reconnect the brake (5) if the excess torque conditions cease.

6. The solar tracker according to claim 5, wherein the controller (8) is configured to identify as cessation of excess torque conditions that the torque drops to values equal to or less than a predetermined upper threshold value.

7. The solar tracker according to claim 6, wherein the controller (8) is configured to identify as cessation of excess torque conditions that the torque drops to values equal to or less than a predetermined upper threshold value in any of the following circumstances:
- in particular single moment(s);
- for a time equal to or greater than a preset time; and
- a predetermined number of times within a predetermined time.

8. The solar tracker according to any of claims 1-7, wherein the torque sensors (9, 10, 11) comprise strain gauges (9, 10, 11).

9. The solar tracker according to claim 8, wherein the strain gauges (9, 10, 11) are assembled in pairs.

10. The solar tracker according to any of claims 8-9, wherein the strain gauges (9, 10, 11) comprise first strain gauges (9, 10) attached to the torque tube (2).

11. The solar tracker according to any of claims 8-9, which additionally comprises a gearbox attachment (6) to support the torsion tube (2) on the ground and house the demultiplying system (3), wherein the strain gauges (9, 10, 11) comprise second strain gauges (11) attached to the gearbox attachment (6).

12. The solar tracker according to any of claims 1-11, wherein the brake (5) is selected from: magnetic brake, drum brake and disc brake.

13. The solar tracker according to any of claims 1-12, additionally comprising one or more stoppers (12) to limit the maximum rotation of the solar modules (1).

14. The solar tracker according to claim 13, wherein the stopper (12) or the stoppers (12) are attached to the torque tube (2).

15. The solar tracker according to any of claims 1-14, wherein the demultiplication system (3) comprises a harmonic reduction gearbox or an epicyclic reduction gearbox.
